# EUROPEAN PATENT SPECIFICATION

(11) **EP 4 417 448 B1**
(45) Date of publication and mention of the grant of the patent: **02.07.2025**
(21) Application number: 24151732.5
(22) Date of filing: 12.01.2024
(51) Int. Cl.: B60J 7/06

(54) **A COVERING ASSEMBLY FOR VEHICLES, TRAILERS, SEMI-TRAILERS AND CONTAINERS**
ABDECKANORDNUNG FÜR FAHRZEUGE, ANHÄNGER, SATTELAUFLIEGER UND CONTAINER
ENSEMBLE DE RECOUVREMENT POUR VÉHICULES, REMORQUES, SEMI-REMORQUES ET CONTENEURS

(30) Priority: 16.02.2023 IT 202300002694
(43) Date of publication of application: 21.08.2024
(73) Proprietor: Cramaro Holding S.p.A., 37044 Cologna Veneta (Verona) (IT)
(72) Inventor: Gianazza, Matteo, 37121 Verona (IT)
(74) Representative: De Anna, Pier Luigi

(56) References cited:
- EP-A1- 0 459 879
- EP-A1- 4 122 731
- US-B2- 9 682 515

## Description

The present invention relates in general to covering assemblies for vehicles, trailers, semi-trailers and containers, of the type comprising:
a plurality of carrier ribs configured to support a tarpaulin and to be arranged for sliding along a loading compartment, each carrier rib comprising opposite ends arranged on respective side edges of the loading compartment, and
a pair of flexible connecting elements, each of said connecting elements comprising a strap of plastic material connecting a plurality of ends of said carrier ribs to each other.

In such known systems, one of the carrier ribs, or rather the ends of one of such carrier ribs, is/are connected to a controllable drive system for moving the covering assembly between a retracted position, in which the covering assembly is folded and leaves the underlying loading compartment uncovered, and an extended position, in which the covering assembly completely covers and hence closes the underlying loading compartment.

In the covering assemblies of the type set out at the beginning, the flexible connecting elements (straps) connect the various carrier ribs to each other and, when the covering assembly is hauled between its extended position and its retracted position, ensure correct packing of the sheet, preventing it from collecting untidily so as to prevent movement as well as to prevent premature deterioration.

It has been found that the connecting straps are subject to wear and may break up into multiple portions. Since such straps are inserted into sleeves provided in the tarpaulin, it may prove very difficult to extract the broken portions from the tarpaulin to enable replacement of the straps.

EP0459879 discloses a device for covering road vehicles characterized by side elements called straps arranged at least along the sides of the vehicle, which support movable cross-members attached to a tarpaulin connected to at least one longitudinally deformable batten. The straps are made of an elastic and flexible material, for example synthetic material like polyethylene, polypropylene, polyamide, an elastomer or the like, and are reinforced with one or more cores made of metal or other plastic materials according to the material/sused for the manufacture thereof.

US9682515B2 discloses a process for preparing a ribbon of reinforcement strands or filaments associated on each of its faces with a polymeric binder, said ribbon having a given width substantially constant over its entire length, in which the strands or filaments extend in a direction parallel to the length of the ribbon.

The ribbons I have a length I and a width L. These ribbons consist of an assembly of filaments or of an assembly of strands 1 which extends parallel to the width of the ribbon. A ribbon has a rectangular shape and is associated on each of its large faces to a polymeric binder.

EP 4 122 731 A1 discloses a flexible connecting element for a covering assembly for vehicles, trailers, semi-trailers and containers, said connecting element comprising a strap of plastic material configured to connect a plurality of carrier ribs to each other, said carrier ribs being adapted to support a tarpaulin (T), wherein said connecting element comprises at least one reinforcement cable embedded in the strap.

One object of the present invention is that of providing a solution capable of overcoming the drawback described above, connected with extraction of the broken portions from the tarpaulin, to enable replacement of the straps. This operation is difficult, entails disassembly of the carrier ribs and sliding out of each strap portion.

In the light of this object, the invention provides a covering assembly for vehicles, trailers, semi-trailers and containers, comprising a plurality of carrier ribs configured to support a tarpaulin (T) and to be arranged for sliding along a loading compartment (A), each carrier rib comprising opposite ends configured to be arranged on respective side edges (A1, A2) of the loading compartment (A), and a pair of flexible connecting elements, each of said connecting elements comprising a strap of plastic material connecting a plurality of respective ends of said carrier ribs to each other and wherein the reinforcing material of said assembly consists of a fiber of a plastic material equal to or compatible with the plastic material of the strap, which reinforcing material is of a material that has a greater tensile strength than the plastic material of the strap and of non-woven fabric is bonded to the plastic material of the strap.

A further subject of the invention is a kit-of-parts according to claim 8 for use in a covering assembly for vehicles, trailers, semi-trailers and containers, according to any claim 1-7, said kit-of-parts comprising one or more fixation means of an end of the carrier ribs to the respective connecting element and a couple of flexible connecting elements. Said connecting element comprising a strap of plastic material configured to connect a plurality of carrier ribs to each other, said carrier ribs being adapted to support a tarpaulin (T).

According to a preferred embodiment said kit-of-parts has fixation is made by way of a bolt which fixes the connecting element to the end of the carrier rib.

The connecting element is made by a reinforcing material consisting of a fiber of a plastic material equal to or compatible with the plastic material of the strap and of non-woven fabric of a material that has a greater tensile strength than the plastic material of the strap and bonded to the outer surface of the plastic material of the strap.

The non-woven fabric is formed from fibers made of viscose, polyester, also partially recycled up to 20%, low flammability polyester, polyamide, polypropylene, thermoregulating polyester with functional particles, copolymers of polyester/polyethylene terephthalate, polypropylene/polyethylene terephthalate, unbleached or mixtures thereof: needle-punched, hydro-entangled, thermoregulated, with aqueous dispersion rendering. The non-woven fabrics used in the straps according to the invention have the capacity to bond to white polyester, cotton/polyester and polypropylene substrates. The non-woven fabrics are also made from fibers with flame-retardant and biologically active properties.

The reinforcing non-woven fabric ensures that the integrity of the connecting element is maintained even if the strap of plastic material breaks. In this manner, it is possible to withdraw the connecting element from the tarpaulin for replacement, without there being any risk of portions thereof being left behind inside the sheet.

Preferably, the non-woven fabric is made of a material that has a greater maximum longitudinal and transverse load, a greater longitudinal and transverse tensile strength, greater longitudinal and transverse tear strength, and greater longitudinal and transverse stability with respect to the plastic material of the strap.

The table below shows the values of the technical characteristics of the non-woven fabric based on 100% polyester bonded to the strap according to the invention.

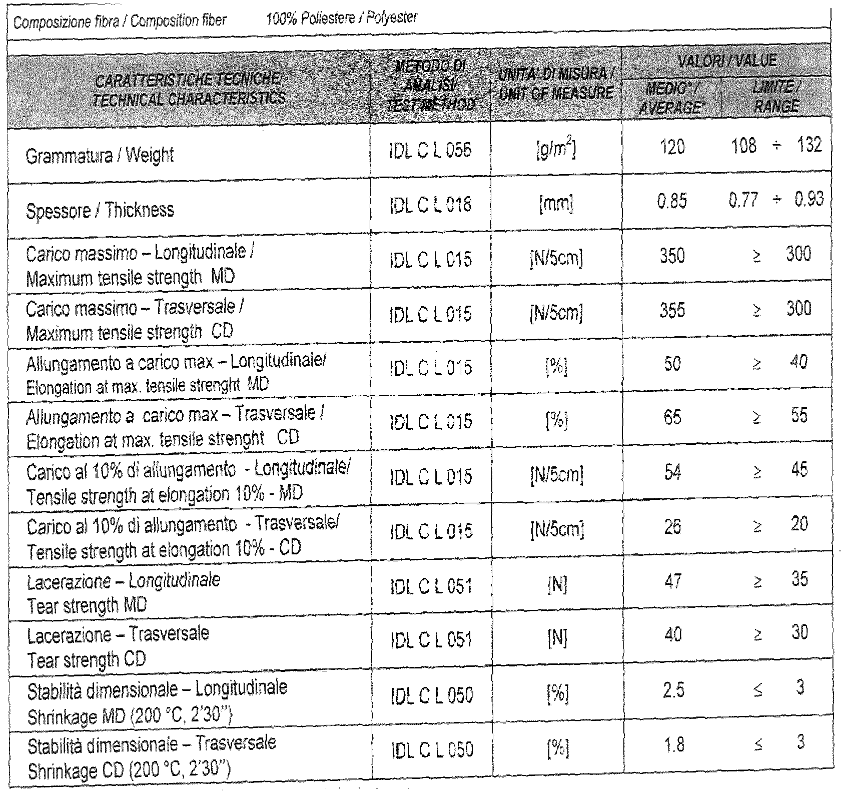

The analysis methods indicated by the initials IDL have the standards according to the table as their reference standards.

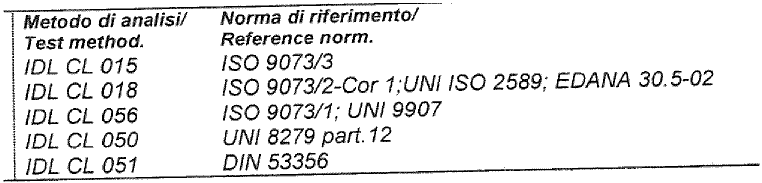

Further characteristics and advantages of the invention will become clearer from the following detailed description of an embodiment of the invention, with reference to the attached drawings, provided purely for non-limiting illustrative purposes, in which:
- figures 1 and 2 are perspective views of a covering assembly according to the invention, in extended position and retracted position respectively;
- figure 3 is a view on an enlarged scale of a detail indicated by the arrow III in figure 1;
- figures 4 and 5 are perspective views of a flexible connecting element of the covering assembly, in retracted position and extended position respectively; and
- figures 6 and 7 are perspective views of the flexible connecting element inserted in a sleeve obtained in a tarpaulin, in normal conditions and in the case of breakage of the connecting element respectively.
- figures 8 and 9 are perspective views of a covering assembly according to the invention, in extended position and retracted position respectively, in which the areas of the connecting elements are shaped and configured to facilitate formation of the folds when the covering assembly is moved to the retracted position.

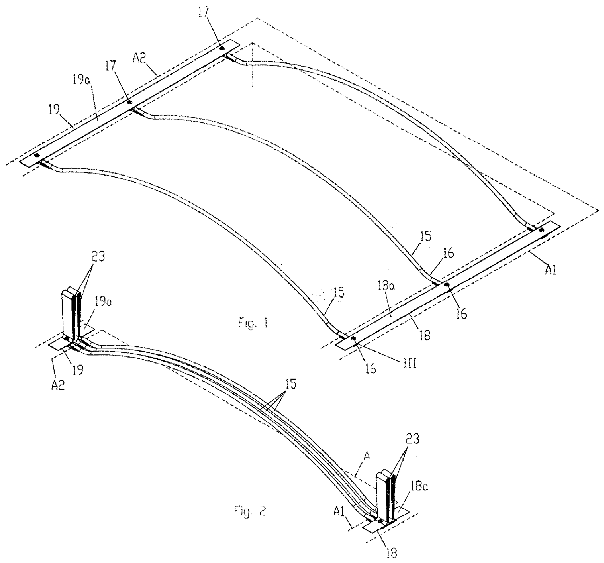

Figure 1 shows a covering assembly, installed on a loading compartment of a vehicle, trailer or container, which is depicted in simplified manner with a dashed line and indicated overall by A.

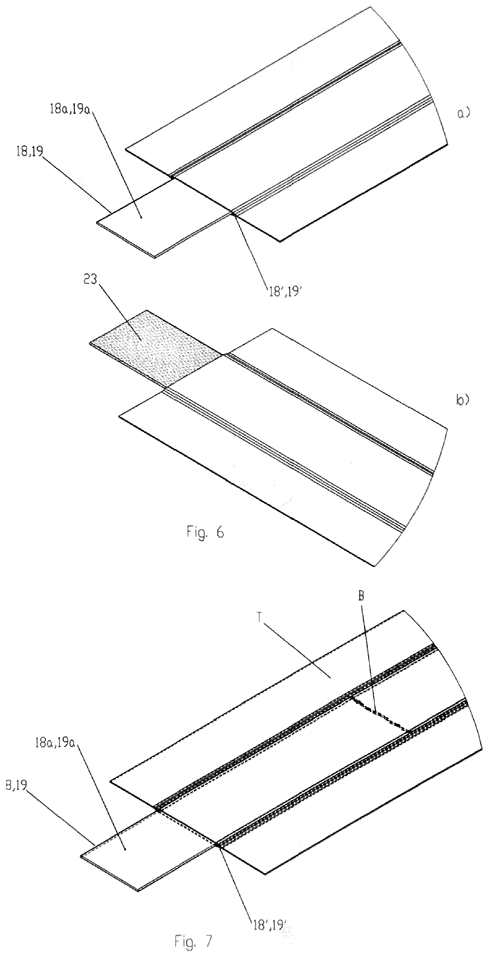

The covering assembly essentially comprises a support structure for a tarpaulin T (represented, in part, only in Figures 6 and 7), and a drive system (not shown).

The support structure allows the tarpaulin to be closed (loading compartment covered by the sheet - Figure 1) or open (sheet packed at one end of the loading compartment - Figure 2). The drive system is configured to move the support structure between an extended position and a retracted position, respectively corresponding to the closed and the open position of the sheet. The drive system may comprise a cord, as in the example shown. Said cord is selectively windable around or unwindable from a reel (not shown), which may be controlled by a motor or by a manually operable handle. The drive system may, however, be of a different type.

The support structure comprises a plurality of carrier ribs 15 configured to support the tarpaulin T. Each carrier rib 15 comprises opposing ends 16, 17 arranged on respective side edges A1, A2 of the loading compartment A. The drive system (not shown) is connected to the ends 16, 17 of one of the carrier ribs 15 arranged terminally in relation to the others.

The support structure furthermore comprises a pair of flexible connecting elements 18, 19. Each of the connecting elements 18, 19 comprises a strap 18a, 19a of plastic material connecting the respective ends 16 and 17 of the carrier ribs 15 to each other.

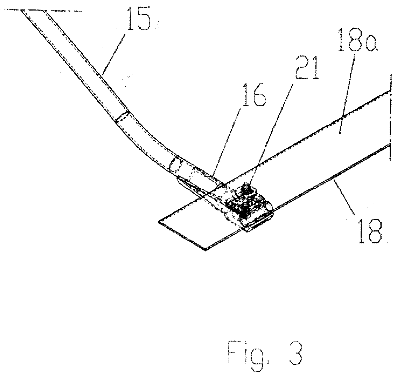

Figure 3 shows a detail of the fixation of the end 16 of one of the carrier ribs 15 to the respective connecting element 18. In particular, said fixation is made by way of a bolt 21 which fixes the connecting element 18 to the end 16 of the carrier rib 15. It is understood that the fixation method is identical for all the carrier ribs 15 and for both connecting elements 18, 19.

The kit-of-parts, not shown, contains a fixation means of the end 16 of one of the carrier ribs 15 to the respective connecting element 18 and couple of flexible connecting elements (18, 19) each consisting essentially of a strap (18a, 19a) of plastic material configured to connect a plurality of carrier ribs (15) to each other, said carrier ribs being adapted to support a tarpaulin (T). In particular, said fixation in the Kit-of-parts is made by way of a bolt 21 which fixes the connecting element 18 to the end 16 of the carrier rib 15.

With reference to Figure 6, each connecting element 18, 19 is inserted inside a sleeve 18', 19' formed along a respective side edge of the tarpaulin T. The above-described bolt 21 secures the end of the carrier rib 15 both to the connecting element 18, 19 and to the tarpaulin T (which was not shown in Figure 3).

Each of the connecting elements 18, 19 comprises, at least on one of the upper or lower surfaces of said connecting element, a reinforcement material 23 formed of a fiber of a plastic material, equal to or compatible with the plastic material of the strap (18a, 19a), and non-woven fabric. Said non-woven fabric is bonded on the outer surface of the plastic material of the strap. According to a preferred embodiment, said non-woven fabric is bonded to the lower surface of the strap (18a, 19a).

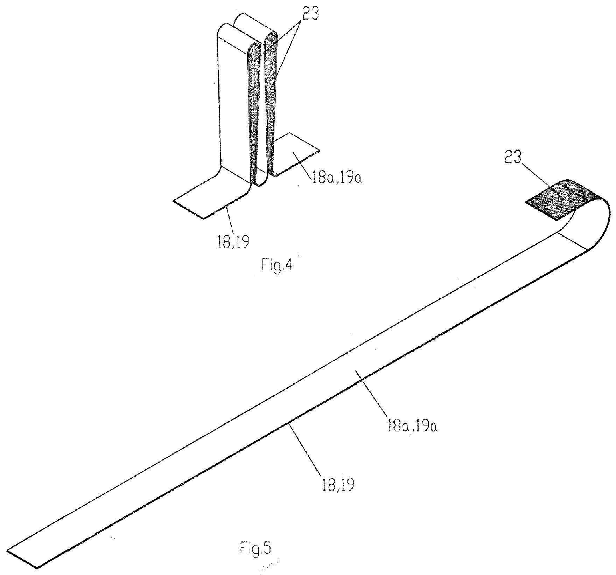

Figures 4 and 5 show only the connecting element 18, 19.

Figure 5 shows the lower surface 23 of the strap 18a, 19a in which the terminal part folded upwards is flecked. The flecked surface 23 indicates the presence in the lower part of the strap of the reinforcement material formed of a fiber of a plastic material according to the invention, equal to or compatible with the plastic material of the strap, and non-woven fabric bonded to the plastic material of the strap 18a, 19a. When the covering assembly is in the retracted position (figure 4), the connecting element 18, 19 (like the tarpaulin T in which it is inserted) creates folds 18", 19'' in the areas located between the connection points with the carrier ribs 15; Figure 4 can be compared with Figure 2 in this respect. In the inner parts of the folds 18", 19'' are the flecked areas 23 formed of the non-woven fabric according to the invention bonded to the lower surface of the strap 18a, 18a. The areas of the connecting elements 18, 19 located between the connection points with the carrier ribs 15 can be shaped or otherwise configured to facilitate formation of the folds when the covering assembly is moved to the retracted position.

Figure 6 shows the upper (a) and lower (b) perspective views of the flexible connecting element 18, 19 inserted in a sleeve obtained in a tarpaulin in normal operating conditions. In Figure 6(a) the strap 18a, 19a is seen in perspective from above, while in Figure 6(b) the strap 18a, 19a is seen in perspective from below and the flecked surface 23 formed of non-woven fabric bonded to the lower surface of the strap 18a, 19a is highlighted. Figure 7 shows the upper perspective view of the flexible connecting element 18, 19 inserted in a sleeve obtained in a tarpaulin T in the case of breakage in section B of the connecting element 18, 19.

The reinforcement material 23 made of non-woven fabric bonded to the strap 18a, 19a of plastic material of the connecting element 18, 19 extends throughout the length of the respective connecting element 18, 19. According to a preferred embodiment said non-woven fabric is bonded on the outer surface of the plastic material of the strap by heat-sealing. Said non-woven fabric is preferably formed of fibers of viscose, polyester, also partially recycled up to 20%, low flammability polyester, polyamide, polypropylene, thermoregulating polyester with functional particles, copolymers of polyester/polyethylene terephthalate, polypropylene/polyethylene terephthalate, unbleached or mixtures thereof: needle-punched, hydro-entangled, thermoregulated, with aqueous dispersion rendering. According to preferred embodiments, the non-woven fabrics used in the straps according to the invention have the capacity to bond to white polyester, cotton/polyester and polypropylene substrates and/or are also made from fibers with flame-retardant and biologically active properties.

Figure 7 shows a similar detail to that of Fig-ure 6. In particular, Figure 7 shows the situation in which a break B occurs which interrupts the continuity of the strap 18a, 19a of plastic material. Since the non-woven fabric bonded on the outer surface of the plastic material of the strap maintains the continuity of the connecting element 18, 19, it is possible to withdraw the latter from the respective sleeve 18', 19' (once the bolts 21 have been undone, obviously) without there being any risk of portions of strap being left behind inside the sleeve, which would make it impracticable to slide out the strap and would require costly replacement of the tarpaulin T. This operation is difficult, entails disassembly of the carrier ribs and sliding out of each strap portion.

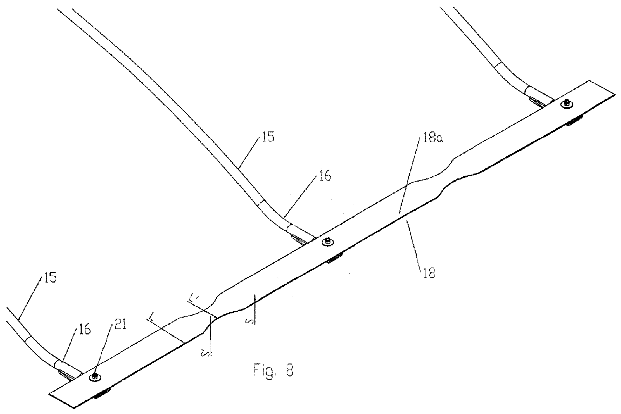

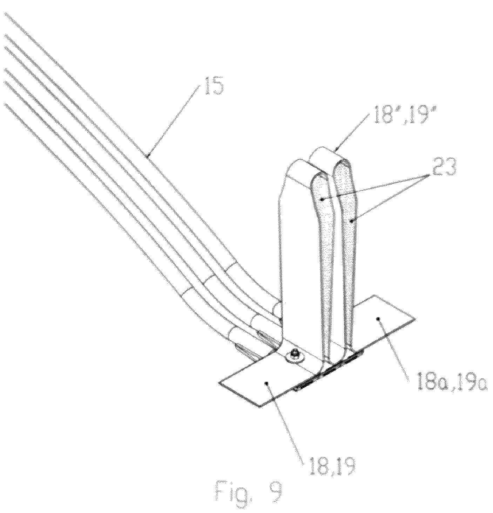

According to a preferred embodiment of the connecting element, the areas of the connecting elements 18, 19 located between the connection points with the carrier ribs 15 are shaped and configured to facilitate formation of the folds when the covering assembly is moved to the retracted position. This embodiment is shown in figures 8 and 9.

In said figures, the shaping of the connecting element 18, 19 is symmetrical, relative to the axis of said connecting element, trapezoidal (not shown) or connected with concave and convex lines to the side edges of said connecting element. According to a preferred embodiment, the thickness S of the connecting elements 18, 19 is between 2 - 5 mm and in the median areas between the connection points with the carrier ribs 15 they are shaped with a reduction in the thickness S from 5 to 40%.

Figure 9 shows in perspective the flexible connecting element of the covering assembly, in the retracted position and extended position respectively. Each of the connecting elements 18, 19 comprises at least on one of the upper or lower surface of said connecting element a reinforcement material 23 formed of a fiber of a plastic material, equal to or compatible with the plastic material of the strap (18a, 19a), and non-woven fabric. Said non-woven fabric is bonded on the outer surface of the plastic material of the strap. According to a preferred embodiment, said non-woven fabric is bonded to the lower surface of the strap (18a, 19a).

## Claims

1. A covering assembly for vehicles, trailers, semi-trailers and containers, comprising a plurality of carrier ribs (15) configured to support a tarpaulin (T) and to be arranged for sliding along a loading compartment (A), each carrier rib (15) comprising opposite ends (16, 17) configured to be arranged on respective side edges (A1, A2) of the loading compartment (A), and a pair of flexible connecting elements (18, 19), each of said connecting elements comprising a strap (18a, 19a) of plastic material connecting a plurality of respective ends (16, 17) of said carrier ribs to each other and wherein said assembly is
**characterized in that**
a reinforcing material consisting of a fiber
• of a plastic material equal to or compatible with the plastic material of the strap (18a, 19a),
• and of non-woven fabric of a material that has a greater tensile strength than the plastic material of the strap,
bonded to the plastic material of the strap (18a, 19a).

2. The covering assembly according to claim 1, wherein said non-woven reinforcing material is bonded on the outer surface of the plastic material of the strap by heat-sealing, preferably on only one surface of said strap.

3. The covering assembly according to claim 1 or 2, wherein the non-woven reinforcing material is formed from fibers made of viscose, polyester, also partially recycled up to 20%, low flammability polyester, polyamide, polypropylene, thermoregulating poly-ester with functional particles, copolymers of polyester/polyethylene terephthalate, polypropylene/polyethylene terephthalate, unbleached or mixtures thereof: needle-punched, hydro-entangled, thermoregulated, with aqueous dispersion rendering.

4. The covering assembly according to claims 1 - 3, wherein the non-woven reinforcing material used in the straps according to the invention have the capacity to bond to white polyester, cotton/polyester and polypropylene substrates.

5. The covering assembly according to claims 1 - 4, wherein the non-woven reinforcing material according to the invention are of a material having:
- a greater maximum longitudinal and transverse load;
- a greater longitudinal and transverse tensile strength;
- an improved longitudinal and transverse tear strength, and/or
- an improved longitudinal and transverse stability with respect to the plastic material of the strap.

6. The covering assembly of claims 1-5, wherein each end (16, 17) of each carrier rib (15) is fixed to the respective connecting element (18, 19) through at least one bolt (21).

7. The covering assembly of any of claims from 1 to 68, wherein each connecting element (18, 19) is inserted into a sleeve (18', 19') formed in the tarpaulin (T).

8. A kit-of-parts for use in a covering assembly for vehicles, trailers, semi-trailers and containers, according to any claim 1-7, said kit-of-parts comprising:
• one or more fixation means of an end (16) of the carrier ribs (15) to the respective connecting element (18, 19) and
• a pair of flexible connecting elements (18, 19) each consisting essentially of a strap (18a, 19a) of plastic material configured to connect a plurality of carrier ribs (15) to each other, said carrier ribs being adapted to support a tarpaulin (T), wherein said connecting element comprises
∘ a reinforcing material consisting of a fiber of a plastic material equal to or compatible with the plastic material of the strap (18a, 19a) and
∘ of non-woven fabric of a material that has a greater tensile strength than the plastic material of the strap and bonded to the outer surface (23) of the plastic material of the strap.

9. The kit-of-parts according to claim 8, wherein said fixation is made by way of a bolt (21) which fixes the connecting element (18, 19) to the end (16) of the carrier rib (15).

10. The kit-of-parts according to claims 8 or 9, wherein said non-woven fabric of said flexible connecting element is bonded on the outer surface of the plastic material of the strap by heat-sealing, preferably on only one surface of said strap.

11. The kit-of-parts according to claim 8-10, wherein the non-woven fabric of said flexible connecting element is formed from fibers made of viscose, polyester, also partially recycled up to 20%, low flammability polyester, polyamide, polypropylene, thermoregulating polyester with functional particles, copolymers of polyester/polyethylene terephthalate, polypropylene/polyethylene terephthalate, unbleached or mixtures thereof: needle-punched, hydro-entangled, thermoregulated, with aqueous dispersion rendering.

12. The kit-of-parts according to claims 8 - 11, wherein the non-woven fabrics of said flexible connecting element used in the straps according to the invention have the capacity to bond to white polyester, cotton/polyester and polypropylene substrates.

13. The kit-of-parts according to claims 8 - 12, wherein the non-woven fabrics of said flexible connecting element according to the invention are of a material having:
- a greater maximum longitudinal and transverse load;
- a greater longitudinal and transverse tensile strength;
- an improved longitudinal and transverse tear strength, and/or
- an improved longitudinal and transverse stability with respect to the plastic material of the strap.

## Patentansprüche

1. Eine Abdeckanordnung für Fahrzeuge, Anhänger, Sattelauflieger und Container, die eine Vielzahl von Trägerrippen (15) umfasst, die darauf ausgelegt sind, eine Plane (T) zu tragen und so angeordnet zu werden, dass sie entlang eines Laderaums (A) gleiten, wobei jede Trägerrippe (15) gegenüberliegende Enden (16, 17) umfasst, die darauf ausgelegt sind, an den jeweiligen Seitenrändern (A1, A2) des Laderaums (A) angeordnet zu werden, und ein Paar flexibler Verbindungselemente (18, 19), wobei jedes der genannten Verbindungselemente einen Riemen (18a, 19a) aus Kunststoffmaterial umfasst, der eine Vielzahl der jeweiligen Enden (16, 17) der genannten Trägerrippen miteinander verbindet, und wobei die genannte Anordnung **dadurch gekennzeichnet ist, dass**
ein Verstärkungsmaterial, das aus einer Faser
• eines Kunststoffmaterials, das dem Kunststoffmaterial des Riemens (18a, 19a) entspricht oder mit diesem kompatibel ist,
• und eines Vliesstoffs aus einem Material besteht, das eine größere Zugfestigkeit als das Kunststoffmaterial des Riemens aufweist,
die mit dem Kunststoffmaterial des Riemens (18a, 19a) verbunden ist.

2. Die Abdeckanordnung nach Anspruch 1, wobei das genannte verstärkende Vliesmaterial durch Heißsiegeln mit der äußeren Oberfläche des Kunststoffmaterials des Riemens verbunden ist, und zwar vorzugsweise auf nur einer Oberfläche des genannten Riemens.

3. Die Abdeckanordnung nach Anspruch 1 oder 2, wobei das verstärkende Vliesmaterial aus Fasern aus Viskose, Polyester, auch bis zu 20 % teilweise recycelt, schwer entflammbarem Polyester, Polyamid, Polypropylen, thermoregulierendem Polyester mit Funktionspartikeln, Copolymeren aus Polyester/Polyethylenterephthalat, Polypropylen/Polyethylenterephthalat, ungebleicht oder Mischungen davon besteht: vernadelt, wasserstrahlverfestigt, thermoreguliert, mit wässriger Dispersionsaufbereitung.

4. Die Abdeckanordnung nach den Ansprüchen 1 bis 3, wobei das gemäß der Erfindung in den Riemen verwendete verstärkende Vliesmaterial die Fähigkeit besitzt, an Trägermaterialen aus weißem Polyester, Baumwolle/Polyester und Polypropylen zu haften.

5. Die Abdeckanordnung nach den Ansprüchen 1 bis 4, wobei das verstärkende Vliesmaterial gemäß der Erfindung aus einem Material besteht, das im Vergleich zum Kunststoffmaterial des Riemens:
- eine größere maximale Längs- und Querbruchlast;
- eine größere Längs- und Querzugfestigkeit;
- eine verbesserte Längs- und Querreißfestigkeit, und/oder
- eine verbesserte Längs- und Querstabilität aufweist.

6. Die Abdeckungsanordnung nach den Ansprüchen 1 bis 5, wobei jedes Ende (16, 17) jeder Trägerrippe (15) durch mindestens eine Schraube (21) an dem jeweiligen Verbindungselement (18, 19) befestigt ist.

7. Die Abdeckanordnung nach jedem der Ansprüche 1 bis 6 wobei jedes Verbindungselement (18, 19) in eine in der Plane (T) ausgebildete Schlaufe (18', 19') eingesetzt ist.

8. Ein Teilesatz zur Verwendung in einer Abdeckanordnung für Fahrzeuge, Anhänger, Sattelauflieger und Container nach jedem der Ansprüche 1-7, wobei der genannte Teilesatz Folgendes umfasst:
• ein oder mehrere Mittel zur Befestigung eines Endes (16) der Trägerrippen (15) an dem jeweiligen Verbindungselement (18, 19) und
• ein Paar flexibler Verbindungselemente (18, 19), die im Wesentlichen jeweils aus einem Riemen (18a, 19a) aus Kunststoffmaterial bestehen, der darauf ausgelegt ist, dass er mehrere Trägerrippen (15) miteinander verbindet, wobei die genannten Trägerrippen dazu geeignet sind, eine Plane (T) zu tragen, wobei das genannte Verbindungselement Folgendes umfasst:
∘ ein Verstärkungsmaterial, das aus einer Faser eines Kunststoffmaterials, das dem Kunststoffmaterial des Riemens (18a, 19a) entspricht oder mit diesem kompatibel ist, und
∘ aus einem Vliesstoff aus einem Material besteht, das eine größere Zugfestigkeit als das Kunststoffmaterial des Riemens aufweist und mit der äußeren Oberfläche (23) des Kunststoffmaterials des Riemens verbunden ist.

9. Der Teilesatz nach Anspruch 8, wobei die genannte Befestigung mittels einer Schraube (21) erfolgt, die das Verbindungselement (18, 19) am Ende (16) der Trägerrippe (15) befestigt.

10. Der Teilesatz nach Anspruch 8 oder 9, wobei der genannte Vliesstoff des genannten flexiblen Verbindungselements durch Heißsiegeln mit der äußeren Oberfläche des Kunststoffmaterials des Riemens verbunden ist, und zwar vorzugsweise mit nur einer Oberfläche des Riemens.

11. Der Teilesatz nach den Ansprüchen 8 bis 10, wobei der Vliesstoff des genannten flexiblen Verbindungselements aus Fasern aus Viskose, Polyester, auch bis zu 20 % teilweise recycelt, schwer entflammbarem Polyester, Polyamid, Polypropylen, thermoregulierendem Polyester mit Funktionspartikeln, Copolymeren aus Polyester/Polyethylenterephthalat, Polypropylen/Polyethylenterephthalat, ungebleicht oder Mischungen davon besteht: vernadelt, wasserstrahlverfestigt, thermoreguliert, mit wässriger Dispersionsaufbereitung.

12. Der Teilesatz nach den Ansprüchen 8 bis 11, wobei die Vliesstoffe des gemäß der Erfindung in den Riemen verwendeten Verbindungselements die Fähigkeit besitzen, an Trägermaterialen aus weißem Polyester, Baumwolle/Polyester und Polypropylen zu haften.

13. Der Teilesatz nach den Ansprüchen 8 bis 12, wobei die Vliesstoffe des genannten flexiblen Verbindungselements gemäß der Erfindung aus einem Material bestehen, das im Vergleich zum Kunststoffmaterial des Riemens:
- eine größere maximale Längs- und Querbruchlast;
- eine größere Längs- und Querzugfestigkeit;
- eine verbesserte Längs- und Querreißfestigkeit, und/oder
- eine verbesserte Längs- und Querstabilität aufweist.

## Revendications

1. Ensemble de recouvrement pour véhicules, remorques, semi-remorques et conteneurs, comprenant une pluralité de nervures de support (15) configurées pour supporter une bâche (T) et pour être agencées afin de coulisser le long d'un compartiment de chargement (A), chaque nervure de support (15) comprenant des extrémités opposées (16, 17) configurées pour être agencées sur des bords latéraux (A1, A2) respectifs du compartiment de chargement (A), et une paire d'éléments de raccordement flexibles (18, 19), chacun desdits éléments de raccordement comprenant une sangle (18a, 19a) de matière plastique reliant entre elles une pluralité d'extrémités (16, 17) respectives desdites nervures de support et dans lequel ledit ensemble est
**caractérisé en ce que**
un matériau de renforcement constitué d'une fibre
• en matière plastique équivalente ou compatible avec la matière plastique de la sangle (18a, 19a),
• et d'un tissu non tissé en un matériau qui a une résistance à la traction supérieure à la matière plastique de la sangle,
lié à la matière plastique de la sangle (18a, 19a).

2. Ensemble de recouvrement selon la revendication 1, dans lequel ledit matériau de renforcement non tissé est lié à la surface extérieure de la matière plastique de la sangle par thermoscellage, de préférence sur une seule surface de ladite sangle.

3. Ensemble de recouvrement selon la revendication 1 ou 2, dans lequel le matériau de renforcement non tissé est formé à partir de fibres de viscose, polyester, même partiellement recyclé jusqu'à 20 %, polyester difficilement inflammable, polyamide, polypropylène, de polyester thermorégulant avec des particules fonctionnelles, de copolymères de polyester/polyéthylène téréphtalate, polypropylène/polyéthylène téréphtalate, non blanchies ou leurs mélanges : aiguilletées, hydro-enchevêtrées, thermorégulées, avec un taux de dispersion aqueuse.

4. Ensemble de recouvrement selon les revendications 1 à 3, dans lequel le matériau de renforcement non tissé utilisé dans les sangles selon l'invention est capable de se lier à des substrats de polyester blanc, coton/polyester et polypropylène.

5. Ensemble de recouvrement selon les revendications 1 à 4, dans lequel le matériau de renforcement non tissé selon l'invention se compose d'un matériau ayant :
- une plus grande charge maximale longitudinale et transversale ;
- une plus grande résistance à la traction longitudinale et transversale ;
- une résistance améliorée à la déchirure longitudinale et transversale, et/ou
- une stabilité améliorée longitudinale et transversale par rapport à la matière plastique de la sangle.

6. Ensemble de recouvrement selon les revendications 1 à 5, dans lequel chaque extrémité (16, 17) de chaque nervure de support (15) est fixée à l'élément de raccordement (18, 19) respectif par l'intermédiaire d'au moins un boulon (21).

7. Ensemble de recouvrement selon l'une quelconque des revendications 1 à 6, dans lequel chaque élément de raccordement (18, 19) est inséré dans un manchon (18', 19') formé dans la bâche (T).

8. Kit de pièces destiné à être utilisé dans un ensemble de recouvrement pour véhicules, remorques, semi-remorques et conteneurs, selon l'une quelconque des revendications 1 à 7, ledit kit de pièces comprenant :
• un ou plusieurs moyens de fixation d'une extrémité (16) des nervures de support (15) à l'élément de raccordement (18, 19) respectif et
• une paire d'éléments de raccordement flexibles (18, 19) étant chacun constitués essentiellement d'une sangle (18a, 19a) en matière plastique configurée pour relier entre elles une pluralité de nervures de support (15), lesdites nervures de support étant adaptées pour supporter une bâche (T), dans lequel ledit élément de raccordement comprend
• un matériau de renforcement constitué d'une fibre en matière plastique équivalente ou compatible avec la matière plastique de la sangle (18a, 19a) et
• d'un tissu non tissé en un matériau qui a une résistance à la traction supérieure à la matière plastique de la sangle et lié à la surface extérieure (23) de la matière plastique de la sangle.

9. Kit de pièces selon la revendication 8, dans lequel ladite fixation est réalisée au moyen d'un boulon (21) qui fixe l'élément de raccordement (18, 19) à l'extrémité (16) de la nervure de support (15).

10. Kit de pièces selon les revendications 8 ou 9, dans lequel ledit tissu non tissé dudit élément de raccordement flexible est lié à la surface extérieure de la matière plastique de la sangle par thermoscellage, de préférence sur une seule surface de ladite sangle.

11. Kit de pièces selon les revendications 8 à 10, dans lequel le tissu non tissé dudit élément de raccordement flexible est formé à partir de fibres de viscose, polyester, même partiellement recyclé jusqu'à 20 %, polyester difficilement inflammable, polyamide, polypropylène, de polyester thermorégulant avec des particules fonctionnelles, de copolymères de polyester/polyéthylène téréphtalate, polypropylène/polyéthylène téréphtalate, non blanchies ou leurs mélanges : aiguilletées, hydro-enchevêtrées, thermorégulées, avec un taux de dispersion aqueuse.

12. Kit de pièces selon les revendications 8 à 11, dans lequel les tissus non tissés dudit élément de raccordement flexible utilisé dans les sangles selon l'invention sont capables de se lier à des substrats de polyester blanc, coton/polyester et polypropylène.

13. Kit de pièces selon les revendications 8 à 12, dans lequel les tissus non tissés dudit élément de raccordement flexible selon l'invention se compose d'un matériau ayant :
- une plus grande charge maximale longitudinale et transversale ;
- une plus grande résistance à la traction longitudinale et transversale ;
- une résistance améliorée à la déchirure longitudinale et transversale, et/ou
- une stabilité améliorée longitudinale et transversale par rapport à la matière plastique de la sangle.
